# EUROPÄISCHE PATENTANMELDUNG

(11) **EP 3 599 740 A1**
(43) Veröffentlichungstag der Anmeldung: **29.01.2020**
(21) Anmeldenummer: 18185507.3
(22) Anmeldetag: 25.07.2018
(51) Int. Cl.: H04L 12/24, H04L 12/26, G06Q 10/06, H04L 9/32

(54) **STEUERN EINES DATENNETZES HINSICHTLICH EINES EINSATZES EINER VERTEILTEN DATENBANK**

(71) Anmelder: Siemens Aktiengesellschaft, 80333 München (DE)
(72) Erfinder: Sachsenhauser, Dominik, 92256 Hahnbach (DE)

(57) **Zusammenfassung**

Die Erfindung betrifft ein Steuern eines Datennetzes (6) hinsichtlich eines Einsatzes einer verteilten Datenbank (300). Dabei wird eine Kapazität von Rechenressourcen einer Vielzahl von Recheneinheiten (3) des Datennetzes (6) erfasst. Der Betrieb des Datennetzes (6) hinsichtlich des Einsatzes der verteilten Datenbank (300) wird abhängig von der Kapazität von Rechenressourcen gesteuert.

## Beschreibung

Die vorliegende Erfindung betrifft die Steuerung eines Datennetzes, um durch diese Steuerung eine verteilte Datenbank innerhalb des Datennetzes zu realisieren oder eine innerhalb des Datennetzes bereits bestehende verteilte Datenbank zu erweitern.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, EP 2891266 B1, das Dokument EP 2961091 A1, das Dokument EP 2961093 A1, das Dokument EP 3028140 B1, das Dokument EP 2930610 B1, das Dokument EP 2940620 B1, das Dokument EP 2899714 A1, das Dokument EP 2981926 A0, das Dokument EP 3125492 B1, das Dokument EP17195125, das Dokument EP17211075, das Dokument EP18178316, das Dokument EP18156084, das Dokument EP18151345, das Dokument EP18167702, das Dokument EP18153594, das Dokument EP18162050, das Dokument EP18178498, das Dokument EP18152117, das Dokument EP18150133, das Dokument EP18169145, das Dokument EP17210647, das Dokument EP18150146, das Dokument EP18167486, das Dokument EP18168670, das Dokument EP18162049, das Dokument EP17203819, das Dokument EP18157168, das Dokument EP18169421, das Dokument EP17210253, das Dokument EP17205224, das Dokument EP18169269, das Dokument EP18169254, das Dokument EP17210288, das Dokument EP18153025, das Dokument EP17200614, das Dokument EP18156308, das Dokument EP17201758, das Dokument EP18156511, das Dokument EP18159485, das Dokument EP17203573, das Dokument EP 17175275, das Dokument EP17186826, das Dokument WO 2018069271 A1, das Dokument PCT/EP2017/082508, das Dokument EP17179823, das Dokument WO 2017050348 A1, das Dokument WO 2018068965 A1 und das Dokument US 8 843 761 B2 bekannt.

Durch heutige Sicherheitstechniken wie VPN (Virtual Private Network) oder durch den Einsatz einer PKI (Public Key Infrastructure) in DMZs (demilitarisierten Zonen) wird im Wesentlichen nur die Sicherheit oder Integrität bei der Übertragung von Daten garantiert. Wenn ein (externer) Angreifer einmal diese Sicherheitstechniken überwunden hat und Daten innerhalb eines Datennetzes manipuliert, ist es heutzutage nahezu unmöglich, diese Manipulation zu erkennen.

Daher stellt sich die vorliegende Erfindung die Aufgabe, die Integrität (d.h. die Wahrhaftigkeit und Richtigkeit der Informationen) eines Datennetzes möglichst umfassend zu garantieren.

Erfindungsgemäß wird diese Aufgabe durch ein Verfahren zum Steuern eines Datennetzes hinsichtlich eines Einsatzes einer verteilten Datenbank nach Anspruch 1, durch eine Vorrichtung nach Anspruch 15, durch ein Computerprogrammprodukt nach Anspruch 17 und durch einen elektronisch lesbaren Datenträger nach Anspruch 18 gelöst. Die abhängigen Ansprüche definieren bevorzugte und vorteilhafte Ausführungsformen der vorliegenden Erfindung.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren", "steuern", "zuweisen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" oder "Vorrichtung" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" oder einer "Recheneinheit" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" oder einer "Sicherheit von Daten" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" oder "Hinterlegen von Daten in der verteilten Datenbank" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner", einer "Vorrichtung" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

Im Rahmen der vorliegenden Erfindung wird ein Verfahren zum Steuern eines Datennetzes hinsichtlich eines Einsatzes einer verteilten Datenbank bereitgestellt. Dabei umfasst das Verfahren folgende Schritte:
- Erfassen von Kapazitäten von Rechenressourcen von Recheneinheiten des Datennetzes. In diesem Schritt kann insbesondere die Auslastung der Recheneinheiten des Datennetzes erfasst werden, um freie Kapazitäten für den Einsatz der verteilten Datenbank zu ermitteln. Zur Durchführung dieses Schrittes können beispielsweise alle Recheneinheiten, welche bereits im Datennetz vorhanden sind, analysiert werden, um freie ungenutzte Kapazitäten dieser Recheneinheiten zu erfassen. Für jede Recheneinheit mit freien ungenutzten Kapazitäten kann dann überprüft werden, ob die jeweilige Recheneinheit genügend Leistung zur Verfügung stellen kann, um quasi zusätzlich oder nebenbei die verteilte Datenbank zu verwalten oder zu betreiben.
- Steuern des Betriebs des Datennetzes bezüglich des Einsatzes der verteilten Datenbank abhängig von der vorab erfassten Kapazität von Rechenressourcen. In diesem Schritt kann insbesondere abhängig von der Auslastung der Recheneinheiten des Datennetzes entschieden werden, ob die vorab erfassten freien Kapazitäten zum Aufbau einer verteilten Datenbank ausreichen, um insbesondere mit der aufgebauten verteilten Datenbank statistisch eine vorbestimmte Mindestsicherheit oder Ziel-Sicherheit darzustellen.

Durch den Aufbau einer verteilten Datenbank (beispielsweise einer Blockchain basierten Datenbank) kann die Integrität des Datennetzes, insbesondere die Integrität der in dem Datennetz gespeicherten Daten oder Datenblöcke, sichergestellt werden. Dadurch kann vorteilhafterweise eine Manipulation von Daten des Datennetzes durch externe Angreifer, aber auch durch interne Angreifer frühzeitig erkannt werden.

Mit der verteilten Datenbank können Daten, mit welchen die Integrität des Datennetzes sichergestellt wird (beispielsweise eine Blockchain) an verschiedenen räumlich getrennten Orten (z.B. auch DMZ übergreifend) gespeichert werden. Die Recheneinheiten, welche die verteilte Datenbank realisieren, gleichen diese Daten typischerweise gegeneinander ab, so dass gewährleistet ist, dass diese Daten an den verschiedenen räumlich getrennten Orten gleich sind. Bei einer Manipulation bestimmter Daten der verteilten Datenbank (z.B. bei der Manipulation einer dieser Blockchains) würde erkannt werden, dass die anderen Daten der verteilten Datenbank (z.B. die anderen Blockchains) eine andere Information beinhalten, woraufhin die manipulierten Daten (z.B. die manipulierte Blockchain) mit den anderen Daten (z.B. den anderen Blockchain) abgeglichen werden, wodurch die Manipulation rückgängig gemacht wird.

Gemäß einer erfindungsgemäßen Ausführungsform kann das Steuern des Betriebs des Datennetzes ein Zuweisen von Rechenaufgaben im Zusammenhang mit der Hinterlegung von Daten in der verteilten Datenbank an diejenigen Recheneinheiten umfassen, für welche freie Kapazitäten erfasst wurden.

Diese Rechenaufgaben können beispielsweise Aufgaben zur Erzeugung der in der verteilten Datenbank abgespeicherten Daten (z.B. die Erzeugung einer Blockchain) umfassen.

Das Steuern des Betriebs des Datennetzes kann auch das Zuweisen von Rechenaufgaben zur Inbetriebnahme der verteilten Datenbank an diejenigen Recheneinheiten umfassen, für welche freie Kapazitäten erfasst wurden.

Dadurch ist es erfindungsgemäß möglich, dass für den Fall, dass ausreichend freie Kapazitäten bei den Recheneinheiten des Datennetzes vorhanden sind, automatisch die verteilte Datenbank in Betrieb genommen wird. Damit wird vorteilhafterweise quasi automatisch bei einem bestehenden Datennetz für eine Datenintegrität gesorgt.

Gemäß einer erfindungsgemäßen Ausführungsform wird der Betrieb des Datennetzes in Abhängigkeit von einer vorgegebenen Korrelation zwischen einer Sicherheit von Daten, welche in der verteilten Datenbank abgespeichert sind, und Rechenressourcen zum Hinterlegen der Daten in der verteilten Datenbank gesteuert.

Die Sicherheit oder Integrität der in der verteilten Datenbank gespeicherten Daten hängt oftmals insbesondere davon ab, wie diese Daten vor einer Manipulation geschützt sind bzw. werden. Ein solcher Schutz kann beispielsweise durch eine entsprechende Verschlüsselung oder durch eine möglichst zahlreiche Verteilung von Kopien der gespeicherten Daten innerhalb der Datenbank bzw. des Datennetzes realisiert werden. Abhängig von der Sicherheit der in der verteilten Datenbank gespeicherten Daten bzw. abhängig von der Art und Weise wie diese Sicherheit realisiert wird, können die benötigten Rechenressourcen zur Bereitstellung dieser Sicherheit bestimmt werden. Dabei besteht oftmals die Tendenz, dass umso mehr Rechenressourcen zur Hinterlegung der Daten in der verteilten Datenbank benötigt werden, je größer die Sicherheit der in der verteilten Datenbank hinterlegten Daten ist, wobei diese Beziehung (zwischen der Sicherheit der Daten und den benötigten Rechenressourcen) der vorgegebenen Korrelation entspricht.

Die Sicherheit der Daten kann dabei beispielsweise durch die Veränderung von Konfigurationsparametern von einem oder von mehreren Sicherheitsmerkmalen der verteilten Datenbank bei der Hinterlegung der Daten verändert werden. Diese Konfigurationsparameter bestimmen insbesondere, wie die in der verteilten Datenbank hinterlegten Daten gegenüber einer Manipulation geschützt werden.

Beispielsweise kann das eine Sicherheitsmerkmal oder die mehreren Sicherheitsmerkmale eine Verkettungsprüfsumme von sequenziell hinterlegten Daten umfassen. Z.B. könnte die Länge und/oder der Algorithmus zum Bilden der Verkettungsprüfsumme als Sicherheitsmerkmal vorgesehen sein.

Wenn es sich bei der verteilten Datenbank um eine Blockchain basierte Datenbank handelt, enthält jeder Block der Blockchain typischerweise einen kryptographisch sicheren Hashwert des jeweils vorhergehenden Blocks, was als die Verkettungsprüfsumme im Sinn der vorliegenden Erfindung anzusehen ist. Mit anderen Worten werden durch eine Verkettungsprüfsumme verschiedene Datenblöcke, welche in der verteilten Datenbank gespeichert sind, derart miteinander verknüpft, dass es (nahezu) unmöglich ist, nur einen dieser Datenblöcke zu verändern, ohne dass dies anhand der Verkettungsprüfsumme bemerkbar ist.

Der Betrieb des Datennetzes kann darüber hinaus abhängig von einem Vergleich zwischen der anhand der vorbestimmten Korrelation indizierten Sicherheit der Daten bei der erfassten Kapazität von Rechenressourcen und einer vorgegebenen Ziel-Sicherheit oder Mindestsicherheit gesteuert werden.

Die Mindestsicherheit kann beispielsweise festlegen, wie viel Aufwand betrieben wird, um eine bestimmte Datenmenge (z.B. 1 MB) an (im Datennetz) gespeicherten Rohdaten derart abzuspeichern, dass eine unberechtigte Manipulation dieser Rohdaten zumindest erkannt wird. Die Mindestsicherheit definiert damit beispielsweise insbesondere die Art und Weise, in welcher diese Rohdaten vor einer unberechtigten Manipulation geschützt werden (z.B. eine Verschlüsselung der Rohdaten oder ein Bilden einer Prüfsumme über die Rohdaten). Wenn die Sicherheit beispielsweise mittels einer Blockchain realisiert wird, kann die Definition der Mindestsicherheit auch umfassen, wie viele Kopien der Blockchain existieren und wie diese Kopien der Blockchain in der verteilten Datenbank zu verteilen sind.

Das erfindungsgemäße Verfahren kann weiter ein Erfassen einer Netztopologie (der Recheneinheiten) des Datennetzes umfassen, so dass die Steuerung des Betriebs des Datennetzes abhängig von dieser Netztopologie erfolgen kann.

Die Netztopologie kann eine Anordnung verschiedener Recheneinheiten zueinander im Datennetz beschreiben, d.h. also eine Kommunikationskopplung mit oder ohne zwischengeschalteten Routern, etc..

Aufgrund der aktuellen Netztopologie des Datennetzes und der aktuellen Auslastung der Recheneinheiten, wobei vorhandene DMZs und örtliche Dislozierungen des Datennetzes berücksichtigt werden, kann erfindungsgemäß vorgeschlagen oder gesteuert werden, an welchen Stellen Recheneinheiten des Datennetzes zum Betreiben der verteilten Datenbank einzusetzen sind.

Dabei wird unter den örtlichen Dislozierungen verstanden, welche Standorte (etwa Werke, Betriebsstätten, Außenposten, etc.) Teil des Datennetzes sind, und welche Brandschutzzonen, Schaltkästen und Stromversorgungsabschnitte usw. in einem Standort bezüglich des Datennetzes existieren.

Dabei umfasst das Steuern des Betriebs des Datennetzes in manchen Beispielen insbesondere auch ein Anpassen der Netztopologie.

Das Anpassen der Netztopologie kann ein Hinzufügen von Verbindungen zwischen Recheneinheiten des Datennetzes, aber auch ein Entfernen von Verbindungen zwischen solchen Recheneinheiten umfassen.

Darüber hinaus kann das Steuern des Betriebs des Datennetzes ein Hinzufügen und ein Entfernen von Recheneinheiten aus dem Datennetz umfassen.

Wenn die erfindungsgemäße Bewertung des Datennetzes insbesondere hinsichtlich der freien Kapazität der Rechenressourcen der Recheneinheiten des Datennetzes ergibt, dass diese freie Kapazität nicht ausreicht, um beispielsweise mit der zu erzeugenden verteilten Datenbank die vorgegebene Mindestsicherheit zu realisieren, kann das erfindungsgemäße Verfahren vorschlagen, wie viele Recheneinheiten dem Datennetz (beispielsweise als Blockchain-Manager) an bestimmten Stellen hinzuzufügen sind, um insbesondere statistisch die vorgegebene Mindestsicherheit realisieren zu können.

Diesbezüglich kann die Steuerung des Betriebes des Datennetzes umfassen, dass Benutzeranweisungen über eine Benutzerschnittstelle ausgegeben werden, wobei diese Benutzeranweisungen physikalische Anpassungen des Datennetzes betreffen.

Anhand dieser Benutzeranweisungen kann erfindungsgemäß mit Benutzern des Datennetzes kommuniziert werden, um dadurch insbesondere die zum Erreichen der Mindestsicherheit notwendigen Anpassungen (z.B. Hinzufügen von Recheneinheiten und Verbindungen zwischen Recheneinheiten) vorzunehmen.

Der Benutzer kann bei der Anwendung des erfindungsgemäßen Verfahrens angeben, welche Mindestsicherheit (Level an Sicherheit) er mittels der verteilten Datenbank erzielen möchte. Nach der erfindungsgemäßen Bewertung des Datennetzes (z.B. Bestimmung der freien Kapazitäten der Recheneinheiten) kann dem Benutzer dann von dem erfindungsgemäßen Verfahren mitgeteilt werden, wie viele zusätzliche Recheneinheiten oder Recheneinheiten und/oder netzwerkseitige Investitionen (z.B. zusätzliche Datenverbindungen) an welchen Stellen des Datennetzes hinzuzufügen sind, damit mit der derart erweiterten verteilten Datenbank die angestrebte Mindestsicherheit erzielt werden kann. Das erfindungsgemäße Verfahren kann bei der Planung eines neuen Datennetzes, zur Erweiterung eines bestehenden Datennetzes um die verteilte Datenbank sowie zur Erweiterung eines bestehenden Datennetzes mit bereits vorhandener verteilter Datenbank eingesetzt werden.

Falls das Datennetz bereits eine verteilte Datenbank aufweist, können erfindungsgemäß nachträgliche Analysen bei einer Erweiterung bzw. einem Umbau des Datennetzes zur Verfügung gestellt werden, um die verteilte Datenbank (z.B. eine bestehende Blockchain) weiter auszubauen oder die zu erzielende Mindestsicherheit zu pflegen bzw. zu erweitern. Dabei können zusätzlich beispielsweise durch eine sich ständig wiederholende Überprüfung des Datennetzes freiwerdende Rechenressourcen (z.B. CPU-Leistungen) oder neu hinzu kommende Rechenressourcen automatisch erkannt und zur Erweiterung der verteilten Datenbank eingesetzt werden.

In der verteilten Datenbank werden insbesondere Daten hinterlegt, welche Betriebsparameter des Datennetzes indizieren.

Indem in der verteilten Datenbank (z.B. in der Blockchain) Daten hinterlegt werden, welche von Betriebsparametern des Datennetzes abgeleitet sind, kann vorteilhafterweise mit der verteilten Datenbank erkannt werden, ob diese Betriebsparameter unerlaubt geändert wurden.
Die in der verteilten Datenbank hinterlegten Daten, welche die Betriebsparameter des Datennetzes indizieren, umfassen dabei beispielsweise Versionierungsinformationen von Software oder Datenpaketen, welche in dem Datennetz gespeichert sind.

Dadurch führt jede Versionsänderung dieser Software oder dieser Datenpakete (wie z.B. Dateien) zu einer entsprechenden Änderung der verteilten Datenbank. Dadurch kann jede entsprechende Versionsänderung anhand der verteilten Datenbank (z.B. Blockchain) überprüft werden, so dass unautorisierte (Versions-) Änderungen erkannt werden können.

Mit der verteilten Datenbank (z.B. Blockchain) kann erfindungsgemäß auch eine unautorisierte Manipulation aller Updates der im Datennetz vorhandenen Recheneinheiten (Firmware) wie auch sonstiger Software bzw. Daten, welche genutzt, verwendet oder versendet werden, erfasst werden und somit die angestrebte Sicherheit auf ein hohes Niveau gehoben werden.

Erfindungsgemäß kann auch eine in der verteilten Datenbank abgespeicherte Information (z.B. Blockchain-Information) mit im Datennetz zu übertragenden Daten verknüpft werden, um so die Integrität dieser Daten bei der Verarbeitung oder Übertragung zu einem externen Speicher (z.B. Cloud) sicherzustellen.

Als allgemeine Regel wäre es aber möglich, Daten die einen anderen Informationsgehalt als die Betriebsparameter des Datennetzes selbst tragen, in der verteilten Datenbank zu hinterlegen. Es wäre etwa möglich, Daten in der verteilten Datenbank zu hinterlegen, die etwa Messwerte von Sensoren betreffen, die an das Datennetz angeschlossen sind.

Als Recheneinheiten für die Datenbank können dabei multifunktionale Plattformen mit mehreren Kernen eingesetzt werden, im Allgemeinen CPUs und/oder GPUs.

Mit diesen multifunktionalen Plattformen, welche mehrere Kerne aufweisen, kann die Netzlast vorteilhafterweise im Vergleich zu anderen Plattformen reduziert werden. Beispielsweise kann auf jedem ungenutzten Kern bzw. Core oder auf allen vorhandenen Kernen einer solchen multifunktionalen Plattform eine so genannte Blockchain-Recheneinheit (d.h. eine Recheneinheit zur Verwaltung einer Blockchain) realisiert werden. Vorteilhafterweise tritt durch den Datenverkehr zwischen den Kernen derselben multifunktionalen Plattform im Vergleich zu einem Datenverkehr zwischen im Netz verteilten Recheneinheiten eine wesentlich geringere Netzlast auf.

Erfindungsgemäß ist es möglich, dass bestimmte Recheneinheiten des Datennetzes, welche für die verteilte Datenbank eingesetzt werden, nur einen Teil der Blockchain verwalten, wobei dieser Teil zumindest den letzten Block der Blockchain umfasst.

Zur Reduzierung der Netzlast und des Aufwands zur Verwaltung der Blockchain kann eine Hierarchie in die Blockchain-Organisation eingezogen werden. Gemäß dieser Hierarchie existieren in einer ersten Hierarchieebene Blockchain-Verwalter, welche nur den zumindest notwendigen Wurmfortsatz bzw. den vorab beschriebenen Teil der Blockchain verwalten, welcher benötigt wird, um einen neuen Block für die Blockchain zu erzeugen. In einer über der ersten Hierarchieebene liegenden zweiten Hierarchieebene existieren Blockchain-Verwalter, welche jeweils die gesamte Blockchain beinhalten. Durch die Blockchain-Verwalter der ersten Hierarchieebene kann die Netzlast und auch die Speicheranforderungen zum Abspeichern der Blockchain reduziert werden, ohne dadurch Abstriche hinsichtlich der Sicherheit des Datennetzes machen zu müssen. Erfindungsgemäß kann ein Vorgehen, um abhängig von einem bestimmten Block der Blockchain einen den bestimmten Block kennzeichnenden Hashwert zu bestimmen, welcher in einem weiteren Block der Blockchain, welcher dem bestimmten Block direkt folgt, gespeichert ist, geändert werden.

Durch die Möglichkeit, das Vorgehen zur Bestimmung oder Erzeugung des Hashwerts für die Blockchain zu ändern, kann die durch die verteilte Datenbank erzielte Sicherheit des Datennetzes vorteilhafterweise weiter erhöht werden.

Bei dem erfindungsgemäßen Datennetz kann es sich um ein industrielles Datennetz handeln, welches beispielsweise für eine Automobilfirma, ein Gleissystem, ein Kraftwerk, ein Smart Grid oder ein Stromübertragungssystem eingesetzt werden kann. Mit einem erfindungsgemäßen Datennetz können Instandhaltungsdaten, Cloud-Daten oder Gesundheitsdaten gespeichert werden.

Im Rahmen der vorliegenden Erfindung kann auch ein weiteres Verfahren zum Bewerten eines Datennetzes hinsichtlich eines Einsatzes einer verteilten Datenbank (z.B. Blockchain) bereitgestellt werden. Dieses weitere Verfahren umfasst folgende Schritte:
- Erfassen einer Kapazität von Rechenressourcen einer Vielzahl von Recheneinheiten des Datennetzes. In diesem Schritt werden insbesondere freie Kapazitäten der Rechenressourcen für den Einsatz der verteilten Datenbank ermittelt.
- Bewerten des Datennetzes hinsichtlich des Einsatzes der verteilten Datenbank abhängig von der vorab erfassten Kapazität. In diesem Schritt erfolgt die Bewertung des Datennetzes insbesondere unter der Voraussetzung, dass die vorab ermittelten freien Kapazitäten für die verteilte Datenbank eingesetzt werden.

Das weitere erfindungsgemäße Verfahren muss nicht unbedingt die Steuerung des Betriebs des Datennetzes umfassen, sondern kann beispielsweise die ermittelte Bewertung des Datennetzes als Information ausgeben, so dass dann abhängig von dieser Information der Einsatz der verteilten Datenbank in dem Datennetz geplant werden kann, um durch den Einsatz der verteilten Datenbank die Integrität der in dem Datennetz gespeicherten Daten sicherzustellen.

Wenn erfindungsgemäß erkannt wird, dass die erfasste Kapazität von Rechenressourcen die technischen Voraussetzungen erfüllt, um in dem Datennetz eine verteilte Datenbank (z.B. eine Blockchain) aufzubauen, können automatisch entsprechende Softwarepakete auf die Recheneinheiten der Recheneinheiten gespielt werden und die verteilte Datenbank dadurch in Betrieb genommen werden. Dies kann beispielsweise durch einen entsprechenden Knopfdruck oder durch einen entsprechenden Schieberegler oder Haken in einem Software-Menü durch einen entsprechenden Benutzer initiiert werden. Für den Fall, dass Hardware-Erweiterungen des Datennetzes erkannt werden, kann die verteilte Datenbank durch zusätzliche Blockchain-Verwalter (d.h. neue Recheneinheiten im Datennetz) automatisch erweitert und somit die Sicherheit erhöht werden. Eine solche Erweiterung kann zum einen durch das Einbringen von Extra-Recheneinheiten für die Blockchain oder durch zusätzliche Anlagen im Datennetz, welche einen Teil der Blockchain-Aufgaben mit übernehmen können, geschehen.

Im Rahmen der vorliegenden Erfindung wird auch eine Vorrichtung zum Steuern eines Datennetzes hinsichtlich eines Einsatzes einer verteilten Datenbank bereitgestellt. Dabei umfasst die Vorrichtung Rechenmittel und einen Anschluss zum Anschließen der Vorrichtung an das Datennetz. Die Vorrichtung ist ausgestaltet, um eine Kapazität von Rechenressourcen einer Vielzahl von Recheneinheiten des Datennetzes zu erfassen und um den Betrieb des Datennetzes hinsichtlich des Einsatzes der verteilten Datenbank abhängig von der vorab erfassten Kapazität von Rechenressourcen zu steuern.

Die Vorteile der erfindungsgemäßen Vorrichtung entsprechen im Wesentlichen den Vorteilen des erfindungsgemäßen Verfahrens, welche vorab im Detail ausgeführt worden sind, so dass hier auf eine Wiederholung verzichtet wird.

Des Weiteren beschreibt die vorliegende Erfindung ein Computerprogrammprodukt, insbesondere eine Software, welche man in einen Speicher einer programmierbaren Steuereinrichtung bzw. einer Recheneinheit, welche mit einem Datennetz verbindbar ist, laden kann. Mit diesem Computerprogrammprodukt können alle oder verschiedene vorab beschriebene Ausführungsformen des erfindungsgemäßen Verfahrens ausgeführt werden, wenn das Computerprogrammprodukt in der Steuereinrichtung läuft. Dabei benötigt das Computerprogrammprodukt eventuell Programmmittel, z.B. Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode (z.B. C++), der noch compiliert und gebunden oder der nur interpretiert werden muss, oder um einen ausführbaren Softwarecode handeln, der zur Ausführung nur noch in die entsprechende Recheneinheit bzw. Steuereinrichtung zu laden ist.

Schließlich offenbart die vorliegende Erfindung einen elektronisch lesbaren Datenträger, z.B. eine DVD, ein Magnetband, eine Festplatte oder einen USB-Stick, auf welchem elektronisch lesbare Steuerinformationen, insbesondere Software (vgl. oben), gespeichert ist. Wenn diese Steuerinformationen (Software) von dem Datenträger gelesen und in eine Steuereinrichtung bzw. Recheneinheit, welche mit einem Datennetz verbindbar ist, gespeichert werden, können alle erfindungsgemäßen Ausführungsformen des vorab beschriebenen Verfahrens durchgeführt werden.

Erfindungsgemäß kann beispielsweise mit einer zentralen Software Schritt für Schritt die durch eine Blockchain realisierte Sicherheit in ein bestehendes Datennetz integriert werden. Die Erfindung kann sowohl in der Planungsphase als auch bei einem bereits bestehenden Datennetz ohne Blockchain sowie bei einem bestehenden Datennetz mit Blockchain eingesetzt werden. Indem die Qualität der eingesetzten Blockchain verbessert wird, kann auch die Qualität oder Integrität des Datennetzes verbessert oder Schritt für Schritt an bestimmte Gegebenheiten angepasst werden. Beispielsweise kann bei einer Vergrößerung des Datennetzes automatisch ein Hinweis erzeugt werden, dass zusätzliche Sicherheiten bezüglich der Blockchain eingebaut werden sollten. Durch die Nutzung bestehender Recheneinheiten und/oder durch Vorschläge zur Platzierung neuer Recheneinheiten oder zur Dislozierung bestehender Recheneinheiten sowie zum Ausrollen der verteilten Datenbank kann erfindungsgemäß eine verteilte Datenbank (z.B. eine Blockchain) kostenoptimiert realisiert werden.

Im Folgenden wird die vorliegende Erfindung anhand erfindungsgemäßer Ausführungsformen mit Bezug zu den Figuren im Detail beschrieben.
In Fig. 1 ist schematisch eine erfindungsgemäße Blockchain dargestellt.
In Fig. 2 ist eine erfindungsgemäße Vorrichtung dargestellt, welche an ein Datennetz angeschlossen ist.
In Fig. 3 ist das in Fig. 2 dargestellte Datennetz mit einer verteilten Datenbank dargestellt.

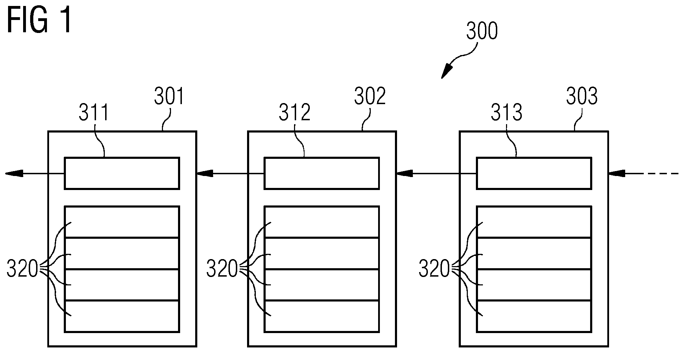

In Fig. 1 ist schematisch eine erfindungsgemäße Blockchain 300 dargestellt. Die Blockchain 300 umfasst mehrere Datenblöcke 301-303, welche in Form einer Kette oder Folge von Datenlöcken 301-303 verknüpft sind. Jeder Datenblock 301-303 weist eine Verkettungsprüfsumme 311-313 auf, welche beispielsweise

einen Hashwert darstellt. Die Prüfsumme 311-313 wird abhängig von dem jeweils vorhergehenden Datenblock innerhalb der Blockchain oder innerhalb der Folge von Datenblöcken 301-303 bestimmt. Beispielsweise wird die Prüfsumme 312 des Datenblocks 302 abhängig von dem Datenblock 301 gebildet, was durch den entsprechenden Pfeil in der Fig. 1 dargestellt wird. Die Prüfsumme 311 bzw. 312 des Datenblocks 301 bzw. 302 kann beispielsweise ein Hashwert sein, welcher anhand der in dem jeweils vorhergehenden Datenblock 302 bzw. 303 gespeicherten Daten berechnet wird. Dadurch kann eine (unautorisierte) Modifikation des Datenblocks 302 bzw. 303 erfasst werden, indem der Datenblock 302 bzw. 303 mit der Prüfsumme 311 bzw. 312 verglichen wird.

In jedem Datenblock 301-303 können Transaktionen 320 gespeichert sein. Jede Transaktion 320 kann entsprechende Daten beinhalten oder auf entsprechende Daten verweisen, indem ein entsprechender Verweis oder eine entsprechende Zusatzinformation oder eine entsprechende Prüfsumme usw. abgespeichert wird.

Die in den Datenblöcken 301-303 gespeicherten Daten (z.B. Transaktionen 320) können beispielsweise Versionsinformationen von in einem Datennetz gespeicherter Software oder Datenpaketen umfassen. Dadurch schützt die Blockchain 300 vor einer unautorisierten Modifikation der Versionsinformationen innerhalb des durch die Blockchain 300 geschützten Datennetzes.

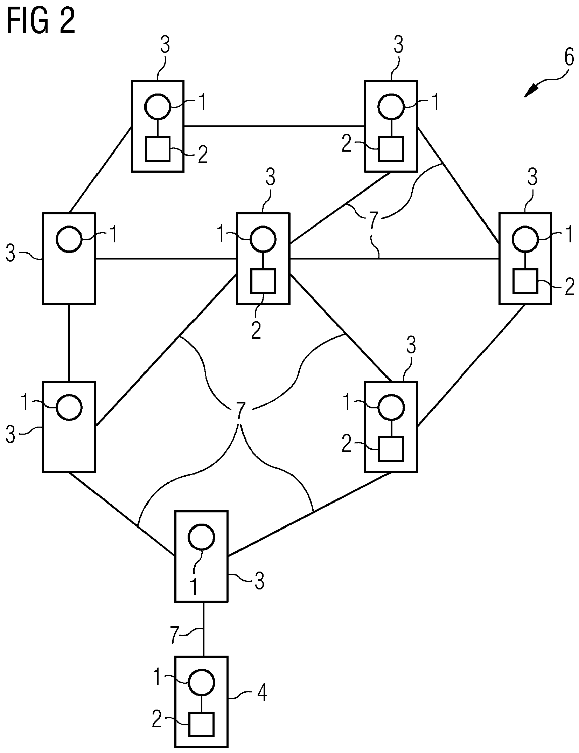

In Fig. 2 ist ein Datennetz 6 dargestellt, an welches eine erfindungsgemäße Vorrichtung 4 angeschlossen ist.

Das Datennetz umfasst mehrere Recheneinheiten 3, welche jeweils zumindest eine CPU 1 meist auch eine Speichereinheit bzw. einen Speicher 2 umfassen. Die Recheneinheiten 3 sind miteinander über Datenleitungen 7 verbunden. Die erfindungsgemäße Vorrichtung 4 ist ebenfalls eine Recheneinheit, welche eine CPU 1 und eine Speichereinheit bzw. einen Speicher 2 umfasst. Die erfindungsgemäße Vorrichtung 4 ist über eine Datenleitung 7 mit dem Datennetz 6 verbunden oder Bestandteil des Datennetzes 6.

Ein erfindungsgemäßes Verfahren zum Steuern des Datennetzes hinsichtlich eines Einsatzes einer verteilten Datenbank (z.B. einer Blockchain 300) läuft auf der erfindungsgemäßen Vorrichtung 4. Das erfindungsgemäße Verfahren erfasst eine Kapazität von Rechenressourcen der Recheneinheiten 3 des Datennetzes 6. Abhängig von dieser Kapazität von Rechenressourcen steuert die Vorrichtung 4 den Betrieb des Datennetzes 6 hinsichtlich des Einsatzes der verteilten Datenbank 300.

Im dargestellten Fall erkennt die erfindungsgemäße Vorrichtung 4, dass drei Recheneinheiten 3 des Datennetzes 6 ausreichend freie Kapazitäten aufweisen, um mit diesen drei Recheneinheiten 3 eine verteilte Datenbank 300 zu erzeugen.

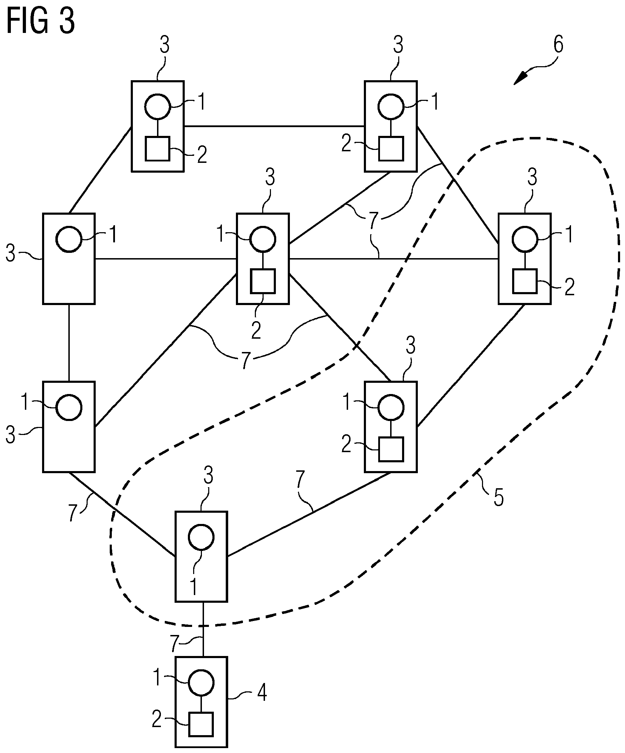

In Fig. 3 sind diese drei Recheneinheiten 3 durch eine gestrichelte Linie 5 zusammengefasst, wobei mit dem Bezugszeichen 5 die für die verteilte Datenbank (insbesondere zur Realisierung einer Blockchain 300) eingesetzten Recheneinheiten 3 kenntlich gemacht werden. Erfindungsgemäß baut die Vorrichtung 4 mit Hilfe dieser drei Recheneinheiten 3 die verteilte Datenbank 300 auf, in welcher dann erfindungsgemäß Versionsinformationen der in dem Datennetz 6 gespeicherten Software und Datenpakete in Form einer Blockchain abgespeichert werden. Dadurch sorgt die erfindungsgemäß aufgebaute verteilte Datenbank bzw. Blockchain 300 für eine Datenintegrität des Datennetzes 6.

## Patentansprüche

1. Verfahren zum Steuern eines Datennetzes (6) hinsichtlich eines Einsatzes einer verteilten Datenbank (300), umfassend:
Erfassen einer Kapazität von Rechenressourcen einer Vielzahl von Recheneinheiten (3) des Datennetzes (6), und
Steuern des Betriebs des Datennetzes (6) hinsichtlich des Einsatzes der verteilten Datenbank (300) abhängig von der Kapazität von Rechenressourcen.

2. Verfahren nach Anspruch 1,
**dadurch gekennzeichnet,**
**dass** das Steuern des Betriebs des Datennetzes (6) umfasst:
Zuweisen von Rechenaufgaben im Zusammenhang mit der Hinterlegung von Daten (320) in der verteilten Datenbank (300) an ein oder mehrere der Vielzahl von Recheneinheiten (3).

3. Verfahren nach Anspruch 1 oder 2,
**dadurch gekennzeichnet,**
**dass** das Steuern des Betriebs des Datennetzes (6) umfasst:
Zuweisen von Rechenaufgaben im Zusammenhang mit der Inbetriebnahme der verteilten Datenbank (300) an ein oder mehrere der Vielzahl von Recheneinheiten (3).

4. Verfahren nach einem der voranstehenden Ansprüche,
**dadurch gekennzeichnet,**
**dass** der Betrieb des Datennetzes (6) abhängig von einer vorgegebenen Korrelation zwischen (i) einer Sicherheit von Daten (320), die in der verteilten Datenbank (300) hinterlegt sind, und (ii) Rechenressourcen zur Hinterlegung der Daten (320) in der verteilten Datenbank (300) gesteuert wird.

5. Verfahren nach Anspruch 4,
**dadurch gekennzeichnet,**
**dass** die Sicherheit der Daten (320) durch Veränderung von Konfigurationsparametern von einem oder mehreren Sicherheitsmerkmalen der verteilten Datenbank (300) bei Hinterlegung der Daten (320) veränderbar ist.

6. Verfahren nach Anspruch 5,
**dadurch gekennzeichnet,**
**dass** die ein oder mehreren Sicherheitsmerkmale eine Verkettungsprüfsumme (311-313) von sequentiell hinterlegten Daten (320) umfassen.

7. Verfahren nach einem der Ansprüche 4 - 6,
**dadurch gekennzeichnet,**
**dass** der Betrieb des Datennetzes (6) abhängig von einem Vergleich zwischen (i) der anhand der vorbestimmten Korrelation indizierten Sicherheit der Daten (320) bei der erfassten Kapazität von Rechenressourcen und (ii) einer vorgegebenen Ziel-Sicherheit gesteuert wird.

8. Verfahren nach einem der voranstehenden Ansprüche,
**dadurch gekennzeichnet,**
**dass** das Verfahren weiter umfasst:
Erfassen einer Netztopologie der Recheneinheiten (3) des Datennetzes (6),
wobei das Steuern des Betriebs des Datennetzes (3) weiterhin abhängig von der Netztopologie des Datennetzes (6) ist.

9. Verfahren nach Anspruch 8,
**dadurch gekennzeichnet,**
**dass** das Steuern des Betriebs des Datennetzes (6) das Anpassen der Netztopologie umfasst.

10. Verfahren nach einem der voranstehenden Ansprüche,
**dadurch gekennzeichnet,**
**dass** das Steuern des Betriebs des Datennetzes (6) das Hinzufügen oder Entfernen von Recheneinheiten (3) aus dem Datennetz (6) umfasst.

11. Verfahren nach einem der voranstehenden Ansprüche,
**dadurch gekennzeichnet,**
**dass** das Steuern des Betriebs des Datennetzes (6) umfasst: Ausgeben von Benutzeranweisungen über eine Benutzerschnittstelle, welche die physikalische Anpassung des Datennetzes (6) betreffen.

12. Verfahren nach einem der vorhergehenden Ansprüche, **dadurch gekennzeichnet,**
**dass** in der verteilte Datenbank (300) Daten (320) hinterlegt werden, welche Betriebsparameter des Datennetzes (6) indizieren.

13. Verfahren nach Anspruch 12,
**dadurch gekennzeichnet,**
**dass** die in der verteilten Datenbank (300) hinterlegten Daten (320) Versionierungsinformation von Software der Recheneinheiten (3) indizieren.

14. Verfahren nach einem der vorhergehenden Ansprüche,
**dadurch gekennzeichnet,**
**dass** als Recheneinheiten (3) für die Datenbank (300) multifunktionale Plattformen mit mehreren Kernen eingesetzt werden.

15. Vorrichtung zum Steuern eines Datennetzes (6) hinsichtlich eines Einsatzes einer verteilten Datenbank (300),
wobei die Vorrichtung (4) Rechenmittel (1) und einen Anschluss (7) zum Anschließen an das Datennetz (6) umfasst, wobei die Vorrichtung (4) ausgestaltet ist,
um eine Kapazität von Rechenressourcen einer Vielzahl von Recheneinheiten (3) des Datennetzes (6) zu erfassen, und
um den Betrieb des Datennetzes (6) hinsichtlich des Einsatzes der verteilten Datenbank (300) abhängig von der Kapazität von Rechenressourcen zu steuern.

16. Vorrichtung nach Anspruch 15,
**dadurch gekennzeichnet,**
**dass** die Vorrichtung (4) zur Durchführung des Verfahrens nach einem der Ansprüche 1-14 ausgestaltet ist.

17. Computerprogrammprodukt, welches ein Programm umfasst und direkt in einen Speicher (2) einer programmierbaren Vorrichtung (4), welche mit einem Datennetz (6) verbindbar ist, ladbar ist, mit Programm-Mitteln, um alle Schritte des Verfahrens nach einem der Ansprüche 1-14 auszuführen, wenn das Programm in der Vorrichtung (4) ausgeführt wird.

18. Elektronisch lesbarer Datenträger mit darauf gespeicherten elektronisch lesbaren Steuerinformationen, welche derart ausgestaltet sind, dass sie bei Verwendung des Datenträgers in einer Vorrichtung (4), welche mit einem Datennetz (6) verbindbar ist, das Verfahren nach einem der Ansprüche 1-14 durchführen.

## Geänderte Patentansprüche

### Geänderte Patentansprüche gemäss Regel 137(2) EPÜ.

1. Verfahren zum Steuern eines Datennetzes (6) hinsichtlich eines Einsatzes einer verteilten Datenbank (300), umfassend:
Erfassen einer Kapazität von Rechenressourcen einer Vielzahl von Recheneinheiten (3) des Datennetzes (6), und
Steuern des Betriebs des Datennetzes (6) hinsichtlich des Einsatzes der verteilten Datenbank (300) abhängig von der Kapazität von Rechenressourcen,
wobei der Betrieb des Datennetzes (6) abhängig von einer vorgegebenen Korrelation zwischen (i) einer Sicherheit von Daten (320), die in der verteilten Datenbank (300) hinterlegt sind, und (ii) Rechenressourcen zur Hinterlegung der Daten (320) in der verteilten Datenbank (300) gesteuert wird.

2. Verfahren nach Anspruch 1,
**dadurch gekennzeichnet,**
**dass** das Steuern des Betriebs des Datennetzes (6) umfasst:
Zuweisen von Rechenaufgaben im Zusammenhang mit der Hinterlegung von Daten (320) in der verteilten Datenbank (300) an ein oder mehrere der Vielzahl von Recheneinheiten (3).

3. Verfahren nach Anspruch 1 oder 2,
**dadurch gekennzeichnet,**
**dass** das Steuern des Betriebs des Datennetzes (6) umfasst:
Zuweisen von Rechenaufgaben im Zusammenhang mit der Inbetriebnahme der verteilten Datenbank (300) an ein oder mehrere der Vielzahl von Recheneinheiten (3).

4. Verfahren nach einem der voranstehenden Ansprüche,
**dadurch gekennzeichnet,**
**dass** die Sicherheit der Daten (320) durch Veränderung von Konfigurationsparametern von einem oder mehreren Sicherheitsmerkmalen der verteilten Datenbank (300) bei Hinterlegung der Daten (320) veränderbar ist.

5. Verfahren nach Anspruch 4,
**dadurch gekennzeichnet,**
**dass** die ein oder mehreren Sicherheitsmerkmale eine Verkettungsprüfsumme (311-313) von sequentiell hinterlegten Daten (320) umfassen.

6. Verfahren nach einem der voranstehenden Ansprüche,
**dadurch gekennzeichnet,**
**dass** der Betrieb des Datennetzes (6) abhängig von einem Vergleich zwischen (i) der anhand der vorbestimmten Korrelation indizierten Sicherheit der Daten (320) bei der erfassten Kapazität von Rechenressourcen und (ii) einer vorgegebenen Ziel-Sicherheit gesteuert wird.

7. Verfahren nach einem der voranstehenden Ansprüche,
**dadurch gekennzeichnet,**
**dass** das Verfahren weiter umfasst:
Erfassen einer Netztopologie der Recheneinheiten (3) des Datennetzes (6),
wobei das Steuern des Betriebs des Datennetzes (3) weiterhin abhängig von der Netztopologie des Datennetzes (6) ist.

8. Verfahren nach Anspruch 7,
**dadurch gekennzeichnet,**
**dass** das Steuern des Betriebs des Datennetzes (6) das Anpassen der Netztopologie umfasst.

9. Verfahren nach einem der voranstehenden Ansprüche,
**dadurch gekennzeichnet,**
**dass** das Steuern des Betriebs des Datennetzes (6) das Hinzufügen oder Entfernen von Recheneinheiten (3) aus dem Datennetz (6) umfasst.

10. Verfahren nach einem der voranstehenden Ansprüche, **dadurch gekennzeichnet,**
**dass** das Steuern des Betriebs des Datennetzes (6) umfasst:
Ausgeben von Benutzeranweisungen über eine Benutzerschnittstelle, welche die physikalische Anpassung des Datennetzes (6) betreffen.

11. Verfahren nach einem der vorhergehenden Ansprüche,
**dadurch gekennzeichnet,**
**dass** in der verteilte Datenbank (300) Daten (320) hinterlegt werden, welche Betriebsparameter des Datennetzes (6) indizieren.

12. Verfahren nach Anspruch 11,
**dadurch gekennzeichnet,**
**dass** die in der verteilten Datenbank (300) hinterlegten Daten (320) Versionierungsinformation von Software der Recheneinheiten (3) indizieren.

13. Verfahren nach einem der vorhergehenden Ansprüche,
**dadurch gekennzeichnet,**
**dass** als Recheneinheiten (3) für die Datenbank (300) multifunktionale Plattformen mit mehreren Kernen eingesetzt werden.

14. Vorrichtung zum Steuern eines Datennetzes (6) hinsichtlich eines Einsatzes einer verteilten Datenbank (300),
wobei die Vorrichtung (4) Rechenmittel (1) und einen Anschluss (7) zum Anschließen an das Datennetz (6) umfasst, wobei die Vorrichtung (4) ausgestaltet ist,
um eine Kapazität von Rechenressourcen einer Vielzahl von Recheneinheiten (3) des Datennetzes (6) zu erfassen,
um den Betrieb des Datennetzes (6) hinsichtlich des Einsatzes der verteilten Datenbank (300) abhängig von der Kapazität von Rechenressourcen zu steuern, und
um den Betrieb des Datennetzes (6) abhängig von einer vorgegebenen Korrelation zwischen (i) einer Sicherheit von Daten (320), die in der verteilten Datenbank (300) hinterlegt sind, und (ii) Rechenressourcen zur Hinterlegung der Daten (320) in der verteilten Datenbank (300) zu steuern.

15. Vorrichtung nach Anspruch 14,
**dadurch gekennzeichnet,**
**dass** die Vorrichtung (4) zur Durchführung des Verfahrens nach einem der Ansprüche 1-13 ausgestaltet ist.

16. Computerprogrammprodukt, welches ein Programm umfasst und direkt in einen Speicher (2) einer programmierbaren Vorrichtung (4), welche mit einem Datennetz (6) verbindbar ist, ladbar ist, mit Programm-Mitteln, um alle Schritte des Verfahrens nach einem der Ansprüche 1-13 auszuführen, wenn das Programm in der Vorrichtung (4) ausgeführt wird.

17. Elektronisch lesbarer Datenträger mit darauf gespeicherten elektronisch lesbaren Steuerinformationen, welche derart ausgestaltet sind, dass sie bei Verwendung des Datenträgers in einer Vorrichtung (4), welche mit einem Datennetz (6) verbindbar ist, das Verfahren nach einem der Ansprüche 1-13 durchführen.
